# EUROPEAN PATENT APPLICATION

(11) **EP 4 838 103 A1**
(43) Date of publication of application: **11.11.2026**
(21) Application number: 25174517.0
(22) Date of filing: 06.05.2025
(51) Int. Cl.: F15B 15/28, G01D 5/26

(54) **PNEUMATIC DRIVE WITH POSITION SENSOR**

(71) Applicant: VAT Holding AG, 9469 Haag (CH)
(72) Inventor: GONCALVES, José Edoardo, 9403 Goldach (CH); LORETZ, Patrick, 6820 Frastanz (AT); LINDNER, Markus, 6822 Satteins (AT)
(74) Representative: Kaminski Harmann

(57) **Abstract**

The invention relates to a pneumatic actuator system (1) comprising a pneumatic actuator (10) with a pneumatic cylinder (11), a moving member (12) movably arranged inside of the pneumatic cylinder (11) and defining a first chamber (13) and a second chamber (14) in the pneumatic cylinder (11), a stem (15) interacting with the moving member (12) in such a way that the stem is moveable with the moving member (12) along a moving axis (A) from a lowered normal position into an elevated position, and back again, the stem extending outside the pneumatic cylinder (11), and a first fluid passage (16) providing passage of a fluid into and out of the first chamber (13). The stem (15) comprises a detection element (20) which detection element (20) provides a detection pattern (21,22), and the pneumatic actuator system (1) comprises an optical fibre coupler (25), the optical fibre coupler (25) comprises a light manipulator (27) arranged and configured to provide measuring light (28) by means of in-coupled light, emit the measuring light (28) on the detection element (20), and receive reflected measuring light reflected from the detection element (20), and an optical fibre (26) configured to couple light in and out of the light manipulator (27).

## Description

### FIELD OF INVENTION

The invention relates to a system and method of controlling a pneumatic actuator to provide improved driving performance of the actuator for operation in vacuum applications.

### BACKGROUND OF THE INVENTION

Vacuum applications are typically performed in vacuum chamber systems. These applications are performed e.g. in the area of IC, semiconductor or substrate fabrication which must take place in a protected atmosphere as far as possible without the presence of contaminating particles.

The vacuum chamber systems comprise in particular at least one evacuatable vacuum chamber which is provided for receiving semiconductor elements or substrates to be processed or produced and which has at least one vacuum chamber opening, through which the semiconductor elements or other substrates can be guided into and out of the vacuum chamber. For example, in a production plant for semiconductor wafers or liquid crystal substrates, the highly sensitive semiconductor or liquid crystal elements pass sequentially through several process vacuum chambers in which the parts located within the process vacuum chambers are each processed by means of a processing device.

The process chambers often have at least one transfer valve whose cross-section is adapted to the substrate and the robot and through which the substrate can be introduced into the vacuum chamber and, if necessary, removed after the intended processing. Alternatively, a second transfer valve may be provided through which the processed substrate is removed from the chamber.

Moreover, the processing system may comprise one or more peripheral units which are used in particular for controlling or regulating the flow of fluid into and/or out of the vacuum chamber. The peripheral units may be provided by a regulation valve which is located between the vacuum chamber and a vacuum pump or another vacuum chamber or by a gas inlet valve, e.g. a mass-flow controller, which is arranged upstream to provide a particular type and amount of a fluid in the vacuum chamber.

A substrate to be processed, e.g. a wafer, is guided, for example, by a suitably designed and controlled robot arm, which can be guided through the opening in the process chamber provided by the transfer valve. The process chamber is then loaded by holding the substrate with the robot arm, introducing the substrate into the process chamber and depositing the substrate in the chamber in a defined manner. The process chamber is emptied accordingly.

For the handling of the substrate and for the exact positioning of the substrate in the chamber, a relatively high accuracy and mobility of the substrate must be ensured. For this purpose, pin lifting systems (also: pin-lifter) are used which provide a plurality of support points for the substrate and thus a load distribution (due to the dead weight of the substrate) over the entire substrate. The pins can be lowered after depositing the substrate and are then present separated from it, i.e. there is no contact between the pins and the substrate. By that, the substrate can be lifted and deposited on a support structure, like a chuck. After removing the robot arm and closing (and introducing process fluid or evacuating) the chamber, the processing step can be performed.

After processing of the substrate, the substrate has to be raised again. Here, a low force effecting the substrate is particularly important, as the substrate can adhere to the carrier, for example. If the substrate is pushed away from the carrier too quickly, the substrate may break, as the adhesive forces cannot be overcome or resolved at least at certain contact points. In addition, even if contact is established between the support pins and the substrate, any impact with the substrate can lead to undesired stress (or breakage).

At the same time, in addition to the gentlest possible and careful treatment of the substrates to be processed, the shortest possible processing time should also be made possible. This means that the substrate should be brought into the defined conditions - loading and unloading position and processing position - in the chamber as quickly as possible.

To avoid unwanted shocks during the processing of semiconductor wafers, for example, US 6,481,723 B1 recommends the use of a special stop device instead of hard motion stops in a pin lifter. Any hard stops should be replaced here by a combination of a softer designed stop part and a hard stop, wherein the contact with the soft stop part is first made for the limitation of movement and then the hard stop is brought into contact with the soft stop part and damped accordingly.

US 6,646,857 B2 proposes a regulation of the lifting movement by means of a recorded occurring force. The lifting pins can be moved as a function of the force signal received so that the lifting force at the lifting pins is always applied to the wafer in a controlled and dosed manner.

In light of fast and reliable processing of substrates, the above described requirement of moving and positioning are applicable on designing and controlling respective vacuum valves, in particular their actuators, accordingly.

Some of the approaches mentioned typically make use of electro-mechanical driving units. By driving such an electro-mechanical device there is generated an electro-magnetic field. However, in the course of substrate processing there often is a plasma, in particular a high frequency modulated electro-magnetic field, to be used to initiate or accelerate chemical processes on the surface of the substrate. The presence of any field generated by any driving means in the processing chamber or close to the chuck or plasma generator influences the field of the plasma. Such undesired manipulation of the plasma field results in correspondingly negative influence on the related processing. In consequence, this leads to less accurate processing results and reduction of processing quality.

To reduce or avoid above drawbacks the electro-mechanical driving systems can be replaced by driving systems which comprise only minor electronic components or even by electroless driving systems, like pneumatic drives. Compared to an electro motor, controlling of an actuation of a pneumatic drive typically is less precise and less direct. However, accurate positioning of a pneumatic actuator is an important characteristic for vacuum application as mentioned above.

### OBJECT OF THE INVENTION

It is therefore the object of the present invention to provide an improved pneumatic actuator which reduces or avoids the above disadvantages.

In particular, it is an object of the invention to provide an improved pneumatic actuating system which enables monitoring of the actuation state.

Further, it is an object of the present invention to provide an improved pneumatic actuator which avoids influencing the electromagnet field of a substrate processing device.

These objects are solved by implementing the characteristic features of the independent claims. Features which further develop the invention in an alternative or advantageous way can be found in the dependent claims.

### SUMMARY OF THE INVENTION

Conventional pneumatic actuators, like lift mechanisms, use an on/off pneumatic valve with manual restrictors to control velocity of a moving member in a pneumatic cylinder. Typically, cylinder position is monitored only with digital end position sensors and compressed air delivery to the cylinder is switched by a solenoid driven spool valve.

In the context of a pin lifting mechanism, which can be driven by such a pneumatic actuator, an interaction with an electrostatic chuck assembly has additionally to be considered. Here, energy release of a substrate is not always consistent, which can lead to substrate breakage if the pneumatic actuator force output of the lift pin is higher than the substrate strength. In some circumstances the substrate may even be displaced, which can result in collision of the substrate with a robot arm causing substrate breakage and/or damage to the robot arm. There is no tracking or feedback of the lift pin position in these lift mechanisms making it unclear as to what caused the failure.

Conventional lift mechanisms also limit throughput because the pneumatic actuator must move the moving member slowly enough to be safe for substrate contact, valve closure or any other application driven by the actuator.

Further, due to the fact that pin lifting systems are typically used for vacuum applications like atomic layer deposition or etching processes any occurrence of external and/or unknown electrical and/or magnetic fields has to be avoided for not negatively influencing the processing of the substrate.

The system according to the present invention provides to derive controlling information for precisely controlling the movement of a pneumatic-driven actuator wherein any electromagnetic influence on relevant system components can be avoided.

The invention relates to a pneumatic actuator system comprising a pneumatic actuator. The pneumatic actuator comprises a pneumatic cylinder, a moving member movably arranged inside of the pneumatic cylinder and defining a first chamber and a second chamber in the pneumatic cylinder by providing separation of an inner volume of the pneumatic cylinder, and a stem interacting with the moving member in such a way that the stem is moveable with the moving member along a moving axis from a lowered normal position into an elevated position, and back again, the stem extending outside the pneumatic cylinder. The pneumatic actuator further comprises a first fluid passage providing passage of a fluid into and out of the first chamber.

The stem comprises a detection element which detection element provides a detection pattern.

The pneumatic actuator system comprises an optical fibre coupler, the optical fibre coupler comprises a light manipulator arranged and configured to provide measuring light by means of in-coupled light, emit the measuring light on the detection element, and receive reflected measuring light reflected from the detection element.

The optical fibre coupler comprises an optical fibre configured to couple light in and out of the light manipulator.

Such configuration provides a measuring capability directly related to a moving part of the actuator. This means that there can be direct feedback concerning a movement of the moving member. Further, by use of the optical fibre coupler, no electronic or magnetic signal has to be generated on side of the actuator to generate the feedback. Hence, the proposed approach can be used for respectively sensitive applications, e.g. processing under vacuum conditions.

In an embodiment, the detection pattern can comprise a first region providing a first reflectivity and a second region providing a second reflectivity, wherein the first reflectivity is different from the second reflectivity, e.g. greater than the second reflectivity. The first detection pattern can comprise a different colour compared to the second detection pattern. The first detection pattern may be provided by an area of a first colour, and the second detection pattern may be provided by an area of a second colour. At least one of the detection patterns may be unicoloured. The first detection pattern may be bright and the second detection pattern may be dark.

In one embodiment, the light manipulator can be configured to provide an elongated projection of the measuring light, in particular wherein the measuring light is emittable on the detection element as an elongated stripe or a line of light.

The light manipulator can be arranged relative to the detection element so that the measuring light partly impinges on the first detection pattern and partly on the second detection pattern. By that, the received light information can dependent to the ratio of measuring light reflected by the first detection pattern and measuring light reflected by the second detection pattern. Such arrangement can provide for detection of changing light intensities as a function of a moving stem. The position of the stem can continuously be determined accordingly.

In one embodiment, the light manipulator can be arranged and configured so that a primary elongation direction of the elongated projection is parallel to the moving axis. As for example, a line of light can be projected along the stem.

According to an embodiment, the light manipulator and the detection element can be configured and arranged so that an amount or intensity of the reflected measuring light receivable in the lowered normal position is different from an amount or intensity of the reflected measuring light receivable in the elevated position.

As mentioned above, the intensities or amounts of light received by the manipulator can change as a function of the position of the stem. This means that in an embodiment, the amount or intensity of the reflected measuring light receivable by the optical fibre coupler can change with moving of the stem, in particular linearly.

In one embodiment, the pneumatic actuator system can comprise a light processing unit connected to the light manipulator by means of the optical fibre and configured at least to detect the reflected measuring light and to provide a detection signal based on the detected reflected measuring light, in particular wherein the light processing unit comprises a light emitter and a light receiver.

The light processing unit can be arranged away from the pneumatic actuator to avoid or prevent any electrical influence on the actuating unit or on any other processing component near the actuating unit. The light processing unit can comprise a detection unit like a sensor which is configured to detect impinging light and convert the optical light information into an electrical signal. The sensor can be a photodetector, a photodiode, a CCD or CMOS.

In one embodiment, the pneumatic actuator system can comprise a controlling unit configured to derive a position information related to a position of the stem relative to the light manipulator, wherein the position information is derived based on the received reflected measuring light, in particular by processing the detection signal.

In one embodiment, the controlling unit can be configured to derive the position information as a function of a detected light intensity.

The controlling unit can be configured to process the detection signal together with a reference (e.g. look-up) table to derive a position of the stem. Such reference table can preferably be determined by means of an in-advance calibration of the pneumatic actuator, e.g. by measuring the position of the stem (e.g. by means of an additionally arranged, external sensor) and assigning respectively received light information to respective positions.

Further, the progress of a change of the light intensity can be monitored and stored and be used for more precise determination of the positions. This is because possible non-linearities of a change of the light intensity can be identified and considered for position determination respectively.

In one embodiment, the controlling unit can be configured to provide a controlling signal to provide controlling of fluid flow into or out of the first chamber and, by that, movement of the stem. In particular, the controlling unit can be configured to derive the controlling signal based on processing of the position information. Controlling of a movement of the pneumatic actuator can be provided as a function of an actual position of the stem. Hence, such controlling can also be based on a pre-known motion profile.

In one embodiment, the pneumatic actuator system can comprise a pressure sensor or fluid flow sensor configured to provide fluid information by measuring pressure in the first chamber or fluid flow into or out of the first chamber, and the controlling unit can be configured to derive the controlling signal based on processing of the fluid information.

By knowing about the actual pressure in the chamber, a precise change of fluid flow or pressure in the first chamber can be determined to provide a particular state of the actuator, e.g. a desired position of the stem.

In one embodiment, the pneumatic actuator system can comprise a control valve, in particular a proportional control valve or a piezo control valve, connected to the first fluid passage and configure to provide defined fluid flow into or out of the first chamber as a function of the applied controlling signal. The controlling unit can respectively be arranged and configured to provide controlling of the control valve to adjust a pressure level in or fluid flow into the chamber.

According to an embodiment, the controlling unit can be configured to control the fluid flow into or out of the first chamber based at least on a target motion profile representing a target position of the stem over time, and the position information. The controlling unit can be configured to determine a position difference based on the target motion profile and the position information and to control the fluid flow to reduce the position difference.

In an embodiment, the controlling unit can be configured to control the fluid flow into or out of the first chamber based on the fluid information (e.g. pressure in one of the chambers or a fluid flow) or a digital model. The digital model can provide determining of an actual state of the pneumatic actuator by processing an actual pressure of the first chamber, the actual state representing an actual position of the stem relative to the light manipulator as a function of the actual pressure.

The controlling unit can also be is configured to determine a pressure difference based on the fluid information or the digital model, respectively, and based on the target motion profile and based on the position information and to control the fluid flow to reduce the pressure difference.

According to one embodiment, the pneumatic actuator can comprise a housing which provides at least the pneumatic cylinder, the moving member, the stem and the first fluid passage.

The housing can comprise a light transmitting region, in particular a recess, configured to provide bi-directional transmission of the measuring light, and the light manipulator is arranged relative to the light transmitting region so that the measuring light emittable by the light manipulator and the reflected measuring light receivable by the light manipulator is transmitted through the light transmitting region.

The light transmitting region can comprise a light transmittable material like glass or plastic.

In one embodiment, the pneumatic actuator can comprise a restoring element in the first or second chamber, which restoring element provides a restoring force applied to the moving member, wherein pressurization of the first chamber effects a force counteracting the restoration force. The restoring force provides the pneumatic actuator to stay in the lowered normal position as long as the counterforce is not sufficiently great.

In one embodiment, the pneumatic actuator system can comprise a second fluid passage providing passage of a fluid into and out of the second chamber and a second control valve connected to the second fluid passage and to a fluid supply and configured to provide controlling of fluid flow into and out of the second chamber.

In an embodiment, the pneumatic actuator system can comprise a pin-lifter and the pneumatic actuator is arranged as a driving unit of the pin-lifter, wherein the stem is coupled to a coupling to hold a lift-pin of the pin-lifter.

In an embodiment, the pneumatic actuator system can comprise a vacuum valve and the pneumatic actuator is arranged as a driving unit of the vacuum valve, wherein the stem can be coupled to a coupling to hold a valve closure, in particular valve disk, of the vacuum valve.

### BRIEF DESCRIPTION OF THE DRAWINGS

The system according to the invention is described in detail hereinafter merely as an example with reference to specific exemplary embodiments shown schematically in the drawings, wherein further advantages of the invention are also discussed. In detail in the figures:
Figure 1 shows an embodiment of a pneumatic system according to the invention.
Figure 2 shows another embodiment of a pneumatic system according to the invention.
Figures 3a and 3b show the embodiment of a pneumatic system of figure 2 in more detail.

### DETAILED DESCRIPTION OF THE DRAWINGS

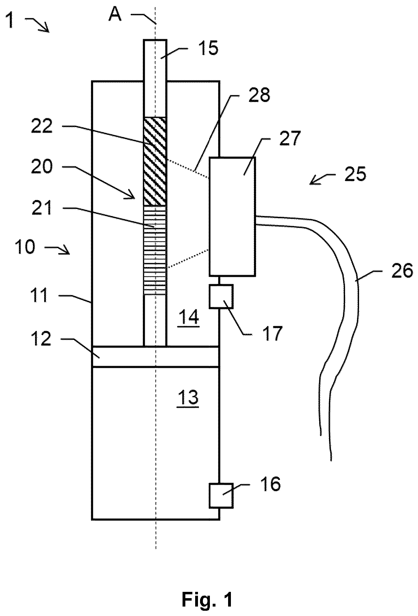

Figure 1 shows schematically an embodiment of a pneumatic system 1 according to the invention.

The pneumatic system 1 comprises a pneumatic actuator 10 with a pneumatic cylinder 11. The cylinder is separated into two chambers 13,14 by a moving member 12. The moving member 12 may preferably be a piston. A stem 15 is connected to the moving member 12 and extends outside the inner volume of the cylinder 11. The stem 15 is configured to provide actuation of a desired element (not shown) to be moved, e.g. a valve disk or a lifting pin. Hence, a load is applied to the moving member 12 by the stem 15, i.e. by the weight of the stem 15, and/or by an additional element which interacts with the stem 15.

The pneumatic actuator 10 further comprises a first fluid passage 16 and a second fluid passage 17. The first fluid passage 16 enables fluid flow into and out of the first chamber 13. The second fluid passage 17 enables fluid flow into and out of the second chamber 14.

In an alternative embodiment, the pneumatic actuator 10 can comprise only one of the fluid passages 16,17 and a restoring element, in particular a spring. The restoring element can be connected to the moving member 12 and can apply a restoring force to the moving member 12. For instance, the restoring element can be arranged inside of the second chamber 14 and the fluid passages 16 provides pressurization of the first chamber 13 to provide and control a force counteracting the restoring force.

The stem 15 comprises a detection element 20, which detection element 20 here is provided by a surface of the stem 15 and provides a detection pattern 21,22. In the present embodiment, the detection pattern 21,22 comprises a first pattern region 21 and a second pattern region 22, wherein the regions provide first and second, i.e. different, reflectivity. The first reflectivity may in particular be greater than the second reflectivity. The detection pattern 21,22 provides determination of a position of the stem along the moving axis A by means of illuminating the detection pattern 21,22 and detecting light reflected by the detection pattern 21,22.

In one other embedment, the detection patter may comprise a particular structure or coding which provides to derive an absolute position as a function of the reflection characteristics.

An optical fibre coupler 25 is arranged at the pneumatic actuator 10 in fixed position. The optical fibre coupler 25 comprises an optical fibre 26 configured to couple light in and out of the optical fibre coupler, and a light manipulator 27. The light manipulator 27 is arranged and configured to provide measuring light 28 by means of the in-coupled light, emit the measuring light 28 on the detection element 20, and receive reflected measuring light reflected from the detection element 20 (surface).

The light manipulator can be configured to provide emitting of the measuring light 28 as an elongated projection, in particular wherein the measuring light is emittable on the detection element 20 as an elongated stripe or a line of light.

The ratio of light reflected from the first pattern region 21 and from the second pattern region 22 changes as a function of the position of the moving member 12 and, thus, of the stem 15 along the axis A. In other words, the intensity of the reflected measuring light depends on the axial position of the stem 15 and varies with moving the stem 15. To each axial position a respective intensity of reflected measuring light is related.

The optical fibre coupler 25 provides to receive the reflected measuring light and, by that, to determine a current intensity and the position of the moving member 12 along the moving axis A. The light collected by the light manipulator 27 is fed to the optical fibre 26.

The pneumatic system 1 can further comprise a light processing unit (not shown) which is connected to the light manipulator 27 by means of the optical fibre 26 and which is configured at least to detect the reflected measuring light and to provide a detection signal based on the detected reflected measuring light.

The light processing unit may also comprise a light emitter and a light receiver.

Due to this configuration, the light processing unit can be located separated from the actuator 10 and the light manipulator 27. In particular, the light processing unit can remotely be located from the pneumatic actuator 10.

Vacuum processing typically is performed in a specifically composed (vacuum) atmosphere and by generating and applying e.g. a plasma or other high voltage/frequency electro-magnetic field. By that, as for example, particular atomic layers can be deposited on a substrate to be processed. One drawback of such application processes is the sensitivity on electro-magnetic radiation in proximity of the processing chamber. In case of generating (undefined) electro-magnetic radiation, like radio-frequent radiation, the field of a plasma generator can be affected which would result in undefined substrate processing.

Typical and known position sensors used with vacuum processing do either require providing radio interference suppressing, e.g. by shielding, or are built with a mechanic mechanism, e.g. a lever, provide sufficient separation from the chamber.

The system according to the invention is configured to initially avoid any electro-magnetic interference with a vacuum processing step. This is provided by use of the optical measuring approach as described together with an optical fibre which provides guiding the measuring light to and from the light manipulator. By that, no additional electro-magnetic field is generated and interference does not occur.

The light processing unit can preferably be configured to receive the reflected measuring light via the fibre 26 and to process the light information to provide a respective detection signal. Such detection signal can represent a level of an intensity of currently received light. For that, the light processing unit can comprise a photodetector, a photo diode, a CMOS or a CCD.

The system can also comprise a controlling unit. The controlling unit can be configured to receive the detection signal, e.g. by wire or wireless connection with the light processing unit or by way of integral configuration of the controlling unit and the light processing unit.

The controlling unit can be configured to derive a controlling signal to control a movement of the moving member 12. Such controlling signal can be applied to control the flow of an actuation fluid into one of the chambers 13,14 and, by that, the movement of the of the moving member 12.

The pneumatic actuator system 1 may comprise a control valve (not shown), in particular a proportional control valve or a piezo control valve, connected to, for instance, the first fluid passage 16 and configure to provide defined fluid flow into or out of the first chamber as a function of the applied controlling signal.

The controlling signal may be derived based on a position information which can be derived by the controlling unit by processing the detected light intensity or the detection signal. A pre-calibration of the reflection characteristics of the detection element 20 as a function of the position of the stem 15 can provided to derive proper position information. As for example, the stem 15 is moved for a defined (measured) distance and a change of the detected intensity or different intensities at a starting point and an end point are detected and stored together with the distance or start- and end-point.

In one embodiment, the actual position information is compared to a target position, e.g. one or more position values of a motion profile of the actuator 10, and the controlling unit is configured to derive the controlling signal based on such comparison. As for example, in case a target position is to be reached at a particular instance in time, the controlling unit can provide a particular controlling signal to adjust the pressure in the chamber 16 to move the moving member 12 accordingly.

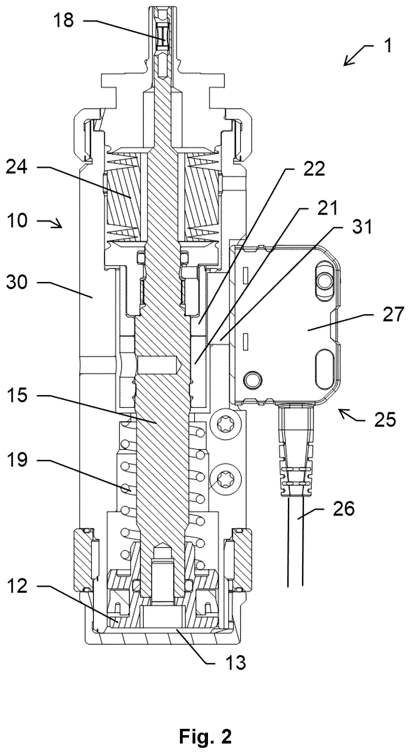

Figure 2 relates to a further embodiment of the invention. The pneumatic actuator 10 of the pneumatic actuator system 1 is provided by a pneumatic pin-lifting device.

The stem 15 of the pneumatic actuator 10 is accordingly configured to be connected with a lift pin for supporting a substate to be processed. The pneumatic actuator 10 comprises a respective coupling 18 which coupling can be moved by means of moving the stem 15.

The pneumatic actuator 10 here also comprises a restoring element 19 which restoring element 19 applies a restoring force to the moving member 12 to provide the stem 15 of the pneumatic actuator 10 to stay in a lowered normal position as along as no (sufficient) counterforce is applied. Such counterforce can be applied and controlled by controlling a flow of fluid into the chamber 13 and, by that, the pressure in the chamber 13 of the pneumatic actuator 10.

The pneumatic actuator 10 also comprises a bellows 24. The bellows 24 provide sealing the actuating part of the actuator 10 from a processing atmosphere, e.g. the interior of a processing chamber. The bellows 24 also provides movability of the stem 15 while the actuating part remains sealed. The bellows 24 can be designed as a gangway bellows and may be built with metal components. A first end of the bellows 24 is connected to the stem 15. A second end of the bellows 24 is connected with the solid counterpart of the pneumatic actuator 10, e.g. the housing 30.

A detection element of the pneumatic actuator 10 is provided by a detection pattern which provides a first region 21 providing a first reflection characteristic, e.g. a first contrast or colour, and a second region 22 providing a second, different reflection characteristic, e.g. second contrast or colour.

The housing 30 of the pneumatic actuator 10 provides the pneumatic cylinder. The housing comprises a light transmitting region 31, in particular a recess, configured to provide bi-directional transmission of the measuring light. The light manipulator 27 is arranged relative to the light transmitting region 31 so that the measuring light emittable by the light manipulator 27 and the reflected measuring light receivable by the light manipulator 27 is transmitted through the light transmitting region 31.

The transmitting region 31 can comprise a material which provides gas-tight sealing of the housing while allowing the measuring light to transmit through the material. The material may be a glass or plastic.

The light manipulator 27 can be attached or mounted on the outside of the housing and can be fixed by clamping or by other fixing means, e.g. screws.

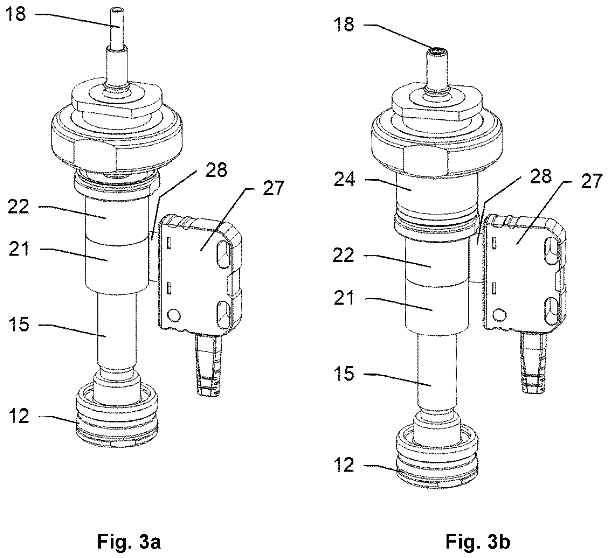

Figures 3a and 3b show details of the pneumatic actuator system 1 according to figure 2 in two different actuation states.

Figure 3a shows the interior of the pneumatic actuator 10 in an elevated state. As can be seen, the coupling 18 for the lift pin is extended. Such state provides transportation of a substrate during operation.

In this elevated position, the measuring light 28 mainly illuminates the first reflection region 21. This means, the characteristic of the reflected measuring light is dominated by the reflection properties of the first reflection region 21.

The measuring light 28 is generated on side of a light processing unit, e.g. a fibre amplifier unit, and is guided to the light manipulator 27 by means of coupling into the optical fibre 26, e.g. provided by a multi fibre optical cable. The light manipulator 27 provides forming or shaping of the measuring light and emitting the light towards the detection element.

The reflected measuring light is received by the light manipulator 27 and is guided back by means of the optical fibre 26 to the light processing unit. The light processing unit comprises a detection unit, e.g. a respective multi fibre optic sensor, to receive and process the received light signal. By that, the optical light signal is converted into an electrical signal which represents a currently measured light property, e.g. the intensity of the received light.

To precisely determine a position as a function of the reflected and received measuring light, a reference run can be performed, in particular to compensate for non-linearities of light detection. This can provide that the determined position corresponds as closely as possible to the actual real position.

Figure 3b shows the pneumatic actuator 10 in a lowered state. As can be seen, the coupling 18 for the lift pin is retracted and the bellows 24 is extended.

In this lowered position, the measuring light 28 mainly illuminates the second reflection region 22. This means, the characteristic of the reflected measuring light is dominated by the reflection properties of the second reflection region 22. In consequence, the intensity of the measuring light reflected in the lowered state differs from the intensity of the measuring light received in the elevated state. The respective position of the stem 15 or moving member 12 can be derived based on these different intensities.

Since the measured light intensity varies according to the ratio of light reflected by the first and the second reflection region, a position change and any intermediate position can continuously be determined.

The light manipulator 27 can comprise a set of optical elements to provide the measuring light in desired shape. The light manipulator 27 may comprise a cylindrical lens and/or a micro-lens array to emit (and receive) the measuring light with an elongated light profile or as a line of light.

It is understood that the depicted figures only schematically depict possible exemplary embodiments. The various approaches can according to the invention also be combined with one another and with prior art methods and devices for measuring positions and controlling of a pneumatic actuator.

## Claims

1. Pneumatic actuator system (1) comprising a pneumatic actuator (10) with
• a pneumatic cylinder (11),
• a moving member (12) movably arranged inside of the pneumatic cylinder (11) and defining a first chamber (13) and a second chamber (14) in the pneumatic cylinder (11) by providing separation of an inner volume of the pneumatic cylinder (11),
• a stem (15) interacting with the moving member (12) in such a way that the stem is moveable with the moving member (12) along a moving axis (A) from a lowered normal position into an elevated position, and back again, the stem extending outside the pneumatic cylinder (11),
• a first fluid passage (16) providing passage of a fluid into and out of the first chamber (13),
**characterized in that**
• the stem (15) comprises a detection element (20) which detection element (20) provides a detection pattern (21,22), and
• the pneumatic actuator system (1) comprises an optical fibre coupler (25), the optical fibre coupler (25) comprises
□ a light manipulator (27) arranged and configured to
· provide measuring light (28) by means of in-coupled light,
· emit the measuring light (28) on the detection element (20), and
· receive reflected measuring light reflected from the detection element (20),
and
□ an optical fibre (26) configured to couple light in and out of the light manipulator (27).

2. Pneumatic actuator system (1) according to claim 1, wherein
the detection pattern (21,22) comprises a first region (21) providing a first reflectivity and a second region (22) providing a second reflectivity, wherein the first reflectivity is greater than the second reflectivity.

3. Pneumatic actuator system (1) according to claim 1 or 2, wherein
the light manipulator (27) is configured to provide an elongated projection of the measuring light (28), in particular wherein the measuring light (28) is emittable on the detection element (20) as an elongated stripe or a line of light, in particular wherein the light manipulator (27) is arranged and configured so that a primary elongation direction of the elongated projection is parallel to the moving axis (A).

4. Pneumatic actuator system (1) according to any of the preceding claims, wherein
• the light manipulator (27) and the detection element (20) are arranged so that an amount or intensity of the reflected measuring light receivable in the lowered normal position is different from an amount or intensity of the reflected measuring light receivable in the elevated position, and/or
• the amount or intensity of the reflected measuring light receivable by the optical fibre coupler (25) changes with moving of the stem, in particular linearly.

5. Pneumatic actuator system (1) according to any of the preceding claims, wherein the pneumatic actuator system (1) comprises a light processing unit connected to the light manipulator (27) by means of the optical fibre (26) and configured at least to detect the reflected measuring light and to provide a detection signal based on the detected reflected measuring light, in particular wherein the light processing unit comprises a light emitter and a light receiver.

6. Pneumatic actuator system (1) according to any of the preceding claims, wherein the pneumatic actuator system (1) comprises a controlling unit configured to derive a position information related to a position of the stem (15) relative to the light manipulator (27), wherein the position information is derived based on the received reflected measuring light, in particular by processing the detection signal.

7. Pneumatic actuator system (1) according to claim 6, wherein
the controlling unit is configured to derive the position information as a function of a detected light intensity, in particular wherein the controlling unit is configured to derive the controlling signal based on processing of the position information.

8. Pneumatic actuator system (1) according to claim 6 or 7, wherein
the controlling unit is configured to provide a controlling signal to provide controlling of fluid flow into or out of the first chamber (13) and, by that, movement of the stem (15).

9. Pneumatic actuator system (1) according to any of the claims 6 to 8, wherein
• the pneumatic actuator system (1) comprises a pressure sensor or fluid flow sensor configured to provide fluid information by measuring pressure in the first chamber (13) or fluid flow into or out of the first chamber (13), and
• the controlling unit is configured to derive the controlling signal based on processing of the fluid information.

10. Pneumatic actuator system (1) according to any of the claims 6 to 10, wherein the controlling unit is configured to control the fluid flow into or out of the first chamber (13) based at least on
• a target motion profile representing a target position of the stem over time, and
• the position information,
wherein the controlling unit is configured to determine a position difference based on the target motion profile and the position information and to control the fluid flow to reduce the position difference.

11. Pneumatic actuator system (1) according to claim 9 and 10, wherein
the controlling unit is configured to control the fluid flow into or out of the first chamber (13) based on
• the fluid information or
• a digital model, the digital model providing determining of an actual state of the pneumatic actuator by processing an actual pressure of the first chamber, the actual state representing an actual position of the stem relative to the light manipulator as a function of the actual pressure,
wherein the controlling unit is configured to determine a pressure difference based on the fluid information or the digital model, respectively, and based on the target motion profile and the position information and to control the fluid flow to reduce the pressure difference.

12. Pneumatic actuator system (1) according to any of the claims 8 to 11, wherein
the pneumatic actuator system comprises a control valve, in particular a proportional control valve or a piezo control valve, connected to the first fluid passage and configure to provide defined fluid flow into or out of the first chamber (13) as a function of the applied controlling signal.

13. Pneumatic actuator system (1) according to any of the preceding claims, wherein the pneumatic actuator (10) comprises a housing (30) which provides at least the pneumatic cylinder (11), the moving member (12), the stem (15) and the first fluid passage (16), wherein the housing (30) comprises a light transmitting region (31), in particular a recess, configured to provide bi-directional transmission of the measuring light (28), and the light manipulator (27) is arranged relative to the light transmitting region (31) so that the measuring light (28) emittable by the light manipulator (27) and the reflected measuring light receivable by the light manipulator (27) is transmitted through the light transmitting region (31).

14. Pneumatic actuator system (1) according to any of the preceding claims, wherein
• the pneumatic actuator (10) comprises a restoring element (19) in the first or second chamber, which restoring element (19) provides a restoring force applied to the moving member (12), wherein pressurization of the first chamber (13) effects a force counteracting the restoration force, or
• the pneumatic actuator system (1) comprises a second fluid passage (17) providing passage of a fluid into and out of the second chamber (14) and a second control valve connected to the second fluid passage (17) and to a fluid supply and configured to provide controlling of fluid flow into and out of the second chamber (14).

15. Pneumatic actuator system (1) according to any of the preceding claims, wherein
• the pneumatic actuator system (1) comprises a pin-lifter and the pneumatic actuator (10) is arranged as a driving unit of the pin-lifter, wherein the stem (15) is coupled to a coupling to hold a lift-pin of the pin-lifter, or
• the pneumatic actuator system (1) comprises a vacuum valve and the pneumatic actuator (10) is arranged as a driving unit of the vacuum valve, wherein the stem (15) is coupled to a coupling to hold a valve closure, in particular valve disk, of the vacuum valve.
